Europäisches Patentamt

European Patent Office

Office européen des brevets

(11) Publication number: **0 076 169**
**B1**

(12) **EUROPEAN PATENT SPECIFICATION**

(45) Date of publication of patent specification: **21.08.85**

(21) Application number: **82305183.4**

(22) Date of filing: **30.09.82**

(51) Int. Cl.⁴: **F 16 J 15/34**

(54) **A mechanical seal for rotary shafts.**

(30) Priority: **30.09.81 GB 8129504**

(43) Date of publication of application:
**06.04.83 Bulletin 83/14**

(45) Publication of the grant of the patent:
**21.08.85 Bulletin 85/34**

(84) Designated Contracting States:
**AT BE CH DE FR GB IT LI LU NL SE**

(56) References cited:
**FR-A- 695 014**
**US-A-2 121 299**
**US-A-2 744 774**
**US-A-2 836 439**

(73) Proprietor: **Flexibox Limited**
**Nash Road Trafford Park**
**Manchester M17 1SS (GB)**

(72) Inventor: **Ribbels, Charhold Peter Theodore**
**Berkendal 71**
**NL-3142 AA Maassluis (Z-H) (NL)**

(74) Representative: **Massey, Alexander et al**
**MARKS & CLERK Scottish Life House Bridge Street**
**Manchester, M3 3DP (GB)**

Courier Press, Leamington Spa, England.

## Description

This invention relates to a mechanical seal for a rotary shaft exiting a housing containing a fluid to be sealed within the housing.

The invention particularly relates to a mechanical seal comprising a stationary seal element sealed in the housing and a rotary seal element sealed to the shaft, each element being provided with an annular seal surface disposed around the shaft and adapted to be urged towards one another to form a running seal therebetween, and at least one of the seal elements being sealed to the shaft or to the housing by an elastomeric O-ring which is compressed between shoulders disposed on the seal elements and on the housing or shaft.

A number of patents describe such seals with various modifications including US—A—2744774.

If however, the housing should become deformed or the shaft become bent or even if the tolerances in manufacture are not particularly close it is possible for the housing to become misaligned with respect to the shaft. If the misalignment is only small there may be sufficient clearance to allow either seal element to move slightly so as to maintain engagement between the opposing faces around the whole periphery of the seal surfaces. If the misalignment is too large however the opposing faces will separate around most of the periphery of the seal leaving only a small portion in contact and consequently the seal will leak. Even if there is sufficient clearance to allow either seal element to move to maintain the seal it is found that such movement sometimes breaks the seal between the stationary element and the housing or between the rotary element and the shaft. This is because this seal is usually provided by an elastomeric sealing ring disposed between and supported by the housing and stationary seal element and the shaft and rotary seal element respectively.

Consequently should either seal element move to any significant extent the support for the sealing ring may be lost at points about its circumference and hence it may leak.

It is an object of this invention therefore to provide a mechanical seal of the type referred to which can accommodate a greater degree of misalignment between the shaft and housing.

The invention achieves this object by forming the shoulder on the shaft or in the housing by a ring having a frusto-spherical surface which mates with and is slidable on a corresponding surface on the shaft or in the housing respectively.

Preferably the corresponding surface is formed on a second ring disposed on the shaft or in the housing.

The centre of rotation of the frusto-spherical seats would ideally coincide with the axis of rotation of the shaft and the plane of the running seal face between the stationary and rotary seal elements. Such an arrangement provides the least radial displacement of the seal face on rotation of one washer with respect to the other. However, because there is an axial load on the washers, such an arrangement offers only a limited bearing surface against the axial load and hence it is found that the seats between the washers must be given a more radial aspect to effectively counter this axial load. This results in placing the centre of rotation beyond the plane of the seal face.

Thus preferably the centre of rotation of the frusto-spherical seats is disposed on the axis of rotation of the shaft at a point such that an extrapolation of the chord cutting the circumference of the circle of rotation at the outer and inner extremities of the frusto spherical seats cuts the axis of rotation of the shaft at an angle of about 60 degrees. The centre of rotation may be disposed on the thrust side of the plane of the frusto spherical seats. Of course, under high pressure conditions it may be found desirable to use a chord angle which is greater than 60 degrees, say about 70 degrees.

The invention is further described hereinafter with reference to the accompanying drawings, in which:

Fig. 1 is a part section through a mechanical seal according to the invention; and

Fig. 2 is a diagram assisting the calculation of the radius of curvature of the frusto-spherical seats of the seal in Fig. 1.

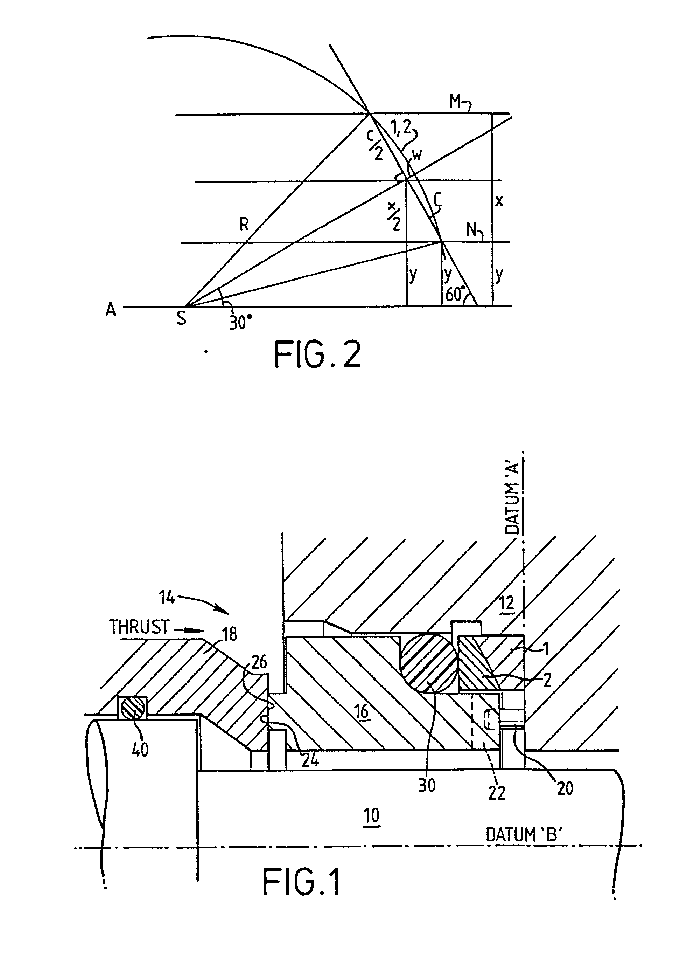

In Fig. 1 shaft 10 passes through a housing 12. The shaft is sealed with respect to the housing by means of a mechanical seal 14 which comprises a stationary element 16 and a rotary element 18. The stationary element 16 is disposed in the housing around the shaft 10 and is prevented from turning with the shaft 10 by means of a peg 20 secured to the housing 12 and engaged in a slot 22 formed in the element 16. The element 16 has an annular sealing face 24 which co-operates with a corresponding face 26 on the rotary element 18. The rotary element 18 is urged towards the stationary element 16 by spring means (not shown but acting in the direction of the arrow labelled THRUST in Fig. 1) in order to provide a sealing force between the faces 24, 26. The element 18 is arranged to rotate with the shaft 10.

An elastomeric sealing ring 30 is disposed between the stationary element 16 and the housing 12 and serves to seal the gap between them. A similar ring 40 seals the gap between the rotary element 18 and the shaft 10. In the case of sealing ring 30 at least, the spring force or thrust assists in maintaining the seal by compressing the sealing ring 30 between the seal element 16 and ring 2 referred to further below.

It is important, in ensuring the operating efficiency of the mechanical seal, that the sealing faces 26, 24 remain in contact and that the integrity of contact is maintained between sealing ring 30, element 16 and housing 12.

Likewise it is essential that sealing contact is maintained between the rotating element sealing ring 40 and its sealing surfaces.

In applications where small misalignments exist between datum-lines A and B (Fig. 1) the flexibility inherent in the sealing elements 30 and 40 allows some small amount of self aligning ability of the sealing interface 24, 26.

Where large misalignments occur however between the datum-lines A and B it is possible, if a conventional arrangement is used, that uniform contact between sealing faces, 24, 26 will not be maintained and that sealing contact will be lost between the sealing rings 30, 40 and their respective sealing surfaces.

The mechanical seal according to this invention allows greater misalignment of the shaft and housing datums without loss of seal at the above mentioned areas. In Fig. 1. This is achieved by mounting the elements 16 via sealing ring 30 on a pair of frusto-spherical rings 1, 2.

With this arrangement, a misalignment of datum B relative to datum A will result initially in a asymetrical distribution of pressure at the sealing faces 26, 24. This asymetry will cause the spherical surfaces of rings 1, 2 to slide relative to one another until a uniform distribution of forces exist at the interface between rings 26, 24 i.e. until rings 18, 16 are in alignment.

Fig. 1 illustrates a convenient method of mounting the rings 1, 2 but it should be appreciated that these could be mounted on the shaft 10 to support the rotary seal element 18.

However, depending on the nature of the misalignment between the shaft and housing, the arrangement illustrated in Fig. 1 is a static one in that, once the stationary seal element 16 has aligned itself with the rotary seal element 18, there is no further movement of the rings 1, 2. If on the other hand the rings 1, 2 mount the rotary seal 18 on the shaft 10 then, as the shaft and rings rotate the rings must continuously slide against one another to maintain the sealing faces 24, 26 in mutual alignment. Such an arrangement can conveniently be referred to as a dynamic arrangement.

Under most conditions the misalignment (if any) between datum lines A and B is static caused for instance by the seal end plate mounting the rotary seal element 18 in the housing 12 not being square to the housing, but if for instance the shaft 10 should be bent then the misalignment will change as the shaft rotates. Under this condition, whether the rings 1, 2 mount the stationary seal element or the rotary seal element, the arrangement will be a dynamic one.

Referring again to Fig. 1 the sealing element 16, which is normally a carbon element bearing against the steel of sealing element 18, is mounted about its external circumference in the housing 12. This ensures the minimum of contact with the shaft 10. Thus the element 16 is arranged to be a close sliding fit in ring 2.

Unlike conventional arrangements however, should the element 16 rotate slightly to accommodate misalignment between datum-lines A, B the axial compression of the sealing ring 30 does not alter significantly because the ring 2 also rotates. Thus not only do the rings 1, 2 allow greater misalignment to be accommodated in respect of the sealing faces 24, 26 but also they maintain the consistency of the seal around sealing ring 30.

In Fig. 1 the frusto-spherical seats are illustrated as being concave with respect to the thrust side of the seal but it should be appreciated that they could alternatively be arranged as being convex with respect to the thrust side of the seal. However, in this event the centre of rotation will be remote from the plane of the running seal face and hence the radial displacement of that face would be considerable as the rings rotate on misalignment of the datum faces A, B.

In either event however, the optimum angle between the chord cutting the circumference of rotation of the frusto-spherical seats at the inner and outer surfaces can vary depending on the precise conditions existing. However, a chord angle of 60 degrees has been found to be satisfactory under some conditions and Fig. 2 illustrates a method of calculating the spherical radius to give this angle.

Referring to Fig. 2 the centre of rotation S of the frusto-conical seat 1, 2 is placed on the axis A of rotation of the shaft 10 (not shown). The seats are to be formed on rings 1, 2 of radial thickness x and internal radius y. The chord C extending between inner and outer surfaces N, M cuts the axis A at an angle of 60 degrees.

From the geometry of this situation it will be appreciated that:—

$$(R-w)\sin 30 = y + x/2 \qquad \text{I}$$

If w is small compared to R then this equation can be approximated to:—

$$R = 2y + x \qquad \text{II}$$

If w is not ignored however it can be determined from equation:—

$$R^2 = (C/2)^2 + (R-w)^2$$
$$=> (R-w) = \sqrt{R^2-(C/2)^2}$$

Substituting in I above gives:—

$$\sqrt{R^2-(C/2)^2} \sin 30 = Y + x/2 \qquad \text{III}$$

C is given by:

$$x = C \sin 60$$
$$=> R = \sqrt{(2y+x)^2 + x^2/4 \sin^2 60}$$

Which again, if x is small, approximates to equation II above.

It should be appreciated that the angle of 60 degrees is a somewhat arbitrary choice and by no means is a limiting factor of the invention. Other angles and radii R may be chosen without unduly affecting the operation of a seal according to the invention.

**Claims**

1. A mechanical seal (14) for a rotary shaft (10) exiting a housing (12) containing a fluid to be sealed within the housing, the seal comprising a stationary seal element (16) sealed in the housing and a rotary seal element (18) sealed to the shaft, each element being provided with an annular seal surface (24, 26) disposed around the shaft (10) and adapted to be urged towards one another to form a running seal therebetween, and at least one of the seal elements (16, 18) being sealed to the shaft or to the housing by an elastomeric or like material O-ring (30) which is compressed between shoulders disposed on the seal elements (16, 18) and on the housing (12) or shaft (10), characterised in that said shoulder in the housing (12) or on the shaft (10) is formed by a ring (2) having a frusto-spherical surface which mates with and is slidable on a corresponding surface in the housing (12) or on the shaft (10).

2. A mechanical seal as claimed in claim 1 characterised in that said corresponding surface is formed on a second ring (1) disposed in the housing (12) or on the shaft (10).

3. A mechanical seal as claimed in claim 1 or claim 2 characterised in that the centre (S) of rotation and radius (R) of the frusto-spherical surfaces are such that an extrapolation of the chord (C) cutting the circle of rotation at the outer (M) and inner (N) extremities of the frusto-spherical surfaces cuts the axis (A) of rotation of the shaft (10) at an angle of about 60 degrees.

4. A mechanical seal as claimed in any preceding claim characterised in that the centre (S) of rotation of the frusto-spherical surfaces is disposed on the thrust side of the plane of the frusto-spherical seats (1, 2).

5. A mechanical seal as claimed in any of claims 2 to 4 characterised in that the first ring (2) adapted to align with the seal element when said seal element is the stationary seal element (16), carries and positions said seal element (16) in the housing (12).

**Patentansprüche**

1. Mechanische Dichtung (14) für eine drehbare Welle (10), die aus einem Gehäuse (12) herausführt, welches ein darin eingeschlossenes Fluid enthält, wobei die Dichtung ein stationäres, dicht im Gehäuse sitzendes Dichtungselement (16) und ein rotierendes, dicht auf der Welle sitzendes Dichtungselement (18) aufweist, jedes Dichtungselement mit einer ringförmigen Dichtfläche (24, 26) versehen ist, welche die Welle (10) umgeben und gegeneinander andrückbar sind, um zwischen sich eine gleitende Dichtung zu bilden, und wenigstens eines der Dichtungselemente (16, 18) gegenüber der Welle oder dem Gehäuse durch einen aus elastomerem oder ähnlichen Material bestehenden O-Ring (30) abgedichtet ist, der zwischen Schultern an den Dichtungselementen (16, 18) und an dem Gehäuse (12) oder der Welle (10) zusammengedrückt ist, dadurch gekennzeichnet, daß die Schulter im Gehäuse (12) oder an der Welle (10) von einem Ring (2) gebildet ist, der eine kugelstumpfförmige Fläche hat, die gleitend an einer entsprechenden Fläche im Gehäuse (12) oder an der Welle (10) anliegt.

2. Mechanische Dichtung nach Anspruch 1, dadurch gekennzeichnet, daß die entsprechende Fläche an einem im Gehäuse (12) oder auf der Welle (10) angeordneten zweiten Ring (1) ausgebildet ist.

3. Mechanische Dichtung nach Anspruch 1 oder 2, dadurch gekennzeichnet, daß das Drehzentrum (S) und der Radius (R) der kugelstumpfförmigen Flächen so gewählt sind, daß eine Verlängerung der Sehne (C), die den Drehkreis an den äußeren (M) und inneren (N) Enden der kugelstumpfförmigen Flächen schneidet, die Drehachse (A) der Welle (10) unter einem Winkel von etwa 60° Grad schneidet.

4. Mechanische Dichtung nach einem der vorhergehenden Ansprüche, dadurch gekennzeichnet, daß sich das Drehzentrum (S) der kugelstumpfförmigen Flächen auf der Druckseite der Ebene der kugelstumpfförmigen Sitzflächen (1, 2) befindet.

5. Mechanische Dichtung nach einem der Ansprüche 2 bis 4, dadurch gekennzeichnet, daß der sich mit dem Dichtungselement ausrichtende erste Ring (2) in dem Fall, wo es das stationäre Dichtungselement (10) ist, dieses trägt und im Gehäuse (12) positioniert.

**Revendications**

1. Un joint mécanique (14) pour un arbre rotatif (10) sortant d'un carter (12) contenant un fluide devant être contenu de façon étanche dans le carter, le joint comprenant un organe d'étanchéité stationnaire (16) monté de façon étanche dans le carter et un organe d'étanchéité rotatif (18) monté de façon étanche sur l'arbre, chaque organe comportant une surface annulaire d'étanchéité (24, 26) disposée autour de l'arbre (10) et adaptée pour être forcées l'une vers l'autre pour former entre elles un joint en mouvement, et au moins l'un des organes d'étanchéité (16, 18) étant fixé de façon étanche sur l'arbre ou sur le carter au moyen d'un bague circulaire (30) en élastomère ou autre matériau analogue, qui est comprimée entre des épaulements disposés sur les organes d'étanchéité (16, 18) et sur le carter (12) ou l'arbre (10), caractérisé en ce que ledit épaulement dans le carter (12) ou sur l'arbre (10) est formé par une bague (2) ayant une surface de forme sphérique tronquée qui correspond avec une surface correspondante dans le carter (12) ou sur l'arbre (10) et coulissant sur cette surface.

2. Un joint mécanique tel que revendiqué dans la revendication 1, caractérisé en ce que ladite surface correspondante est formée sur une seconde bague (1) disposée dans le carter (12) ou sur l'arbre (10).

3. Un joint mécanique tel que revendiqué dans la revendication 1 ou la revendication 2, caractérisé en ce que le centre (S) de rotation et le rayon (R) des surfaces de forme sphérique tronquée sont tels qu'une extrapolation de la corde (C) coupant le cercle de rotation aux extrémités externe (M) et interne (N) des surfaces de forme sphérique tronquée coupe l'axe (A) de rotation de l'arbre (10) suivant un angle d'environ 60°.

4. Un joint d'étanchéite mécanique tel que revendiqué dans l'une quelconque des revendications précédentes, caractérisé en ce que le centre (S) de rotation des surfaces en forme de sphère tronquée est situé sur le côté de poussée du plan des sièges (1, 2) de forme sphérique tronquée.

5. Un joint d'étanchéité mécanique tel que revendiqué dans l'une quelconque des revendications 2 à 4, caractérisé en ce que la première bague (2) adaptée pour s'aligner avec l'organe d'étanchéité lorsque ledit organe d'étanchéité est l'organe d'étanchéité stationnaire (16), porte et positionne ledit organe d'étanchéité (16) dans le carter (12).

FIG. 2

FIG. 1